# EUROPÄISCHE PATENTANMELDUNG

(11) **EP 2 114 037 A2**
(43) Veröffentlichungstag der Anmeldung: **04.11.2009**
(21) Anmeldenummer: 09156373.4
(22) Anmeldetag: 26.03.2009
(51) Int. Cl.: H04L 12/403

(54) **Slavekommunikationsgerät für ein Feldbussystem**

(30) Priorität: 28.04.2008 DE 102008022286
(71) Anmelder: Lapp Engineering & Co., 6330 Cham (CH)
(72) Erfinder: Schiff, Andreas, Dr., 88097 Eriskirch (DE); Schiff, Johannes, Oxford OX4 J8A (GB); Volberg, Jürgen, 53844 Troisdorf (DE)
(74) Vertreter: Hoeger, Stellrecht & Partner Patentanwälte

(57) **Zusammenfassung**

Um ein Slavekommunikationsgerät für ein Feldbussystem umfassend eine Mastereinheit und mindestens eine durch eine zwei Adern aufweisende Busleitung mit der Mastereinheit verbundene Slaveeinheit, wobei das Slavekommunikationsgerät mit der Slaveeinheit lösbar verbindbar ist und wobei mit dem Slavekommunikationsgerät in einem Betriebsmodus die Slaveeinheit adressierbar ist, derart zu verbessern, dass eine erweiterte Kommunikation mit der Slaveeinheit möglich ist, wird vorgeschlagen, dass das Slavekommunikationsgerät bei einer Kommunikation mit der Slaveeinheit zur Energieversorgung mit der Busleitung koppelbar ist.

## Beschreibung

Die Erfindung betrifft ein Slavekommunikationsgerät für ein Feldbussystem, umfassend eine Mastereinheit und mindestens eine durch eine zwei Adern aufweisende Busleitung mit der Mastereinheit verbundene Slaveeinheit, wobei das Slavekommunikationsgerät mit der Slaveeinheit lösbar verbindbar ist und wobei mit dem Slavekommunikationsgerät in einem Betriebsmodus die Slaveeinheit adressierbar ist.

Feldbussysteme sind aus folgenden Veröffentlichungen bekannt:
- AS-i Buch: A-Interface - Die Lösung in der Automation
   Herausgeber: Rolf Becker, 2002,
   Verlag: AS-International Association.
- Bihler-Wiedemann: AS-Interface Analyzer "BW1415"
- Virtuelle Akademie von AS-Interface, www.A-Interface.net
- AS-Interface, Pepperl & Fuchs, Handbuch TDOCT-0159 AGER, 05/2007
Handprogrammiergeräte VBP-HH1
Handheld VPP-HH1-V30

Slavekommunikationsgeräte für derartige Feldbussysteme verfügen lediglich über einen Adressiermodus als Betriebsmodus und im Übrigen muss das Slavekommunikationsgerät die elektrische Energie für den Betrieb der Slaveeinheit zur Verfügung stellen.

Der Erfindung liegt daher die Aufgabe zugrunde, ein Slavekommunikationsgerät zu schaffen, mit welchem eine erweiterte Kommunikation mit der Slaveeinheit möglich ist.

Diese Aufgabe wird bei einem Slavekommunikationsgerät der eingangs beschriebenen Art erfindungsgemäß dadurch gelöst, dass das Slavekommunikationsgerät bei einer Kommunikation mit der Slaveeinheit zur Energieversorgung mit der Busleitung koppelbar ist.

Der Vorteil der erfindungsgemäßen Lösung ist darin zu sehen, dass damit die Möglichkeit besteht, das Slavekommunikationsgerät selbst mit elektrischer Energie aus der Busleitung zu versorgen und somit mit dieser Energie einerseits das Slavekommunikationsgerät zu betrieben und andererseits auch die Slaveeinheit zu betreiben, so dass damit das Slavekommunikationsgerät keine eigene Energiequelle benötigt und somit weit einfacher aufgebaut werden kann und im Übrigen auch die Dauer der Kommunikation zwischen dem Slavekommunikationsgerät und der Slaveeinheit beliebig ausgedehnt werden kann, da über die Busleitung ständig elektrische Energie zum Betrieb des Slavekommunikationsgeräts und der Slaveeinheit zur Verfügung steht.

Besonders vorteilhaft ist es dabei, wenn die Verbindung zwischen der Busleitung dem Slavekommunikationsgerät über eine Steckverbindung mit der Slaveeinheit herstellbar ist, über welche außerdem die Kommunikation mit der Slaveeinheit beim Betrieb des Slavekommunikationsgeräts in dem Betriebsmodus erfolgt.

Hinsichtlich des Aufbaus eines derartigen Slavekommunikationsgeräts wurden bislang keine näheren Angaben gemacht.

So sieht eine vorteilhafte Lösung vor, dass das Slavekommunikationsgerät mindestens einen ersten Sender aufweist, welcher feldbusgeeignete Datensignale zur Übermittlung aussendet.

Um erweiterte Funktionen des Slavekommunikationsgeräts, insbesondere erweiterte Betriebsmodi ausführen zu können, ist vorzugsweise vorgesehen, dass das Slavekommunikationsgerät ein Schaltnetzwerk aufweist, mit welchem der erste Sender entweder mit Busanschlüssen der Steckverbindungseinheit oder mit Slaveanschlüssen der Steckverbindungseinheit verbindbar ist.

Alternativ dazu sieht eine vorteilhafte Lösung vor, dass das Slavekommunikationsgerät einen ersten mit Slaveanschlüssen der Steckverbindungseinheit verbundenen und einen zweiten mit Busanschlüssen der Steckverbindungseinheit verbundenen Sender aufweist.

Darüber hinaus ist vorteilhafterweise vorgesehen, dass das Slavekommunikationsgerät mindestens einen ersten Empfänger aufweist, welcher feldbusgeeignete Datensignale empfängt.

Um die Funktionalitäten eines derartigen Slavekommunikationsgeräts erweitern zu können, ist vorgesehen, dass das Slavekommunikationsgerät ein Schaltnetzwerk aufweist, mit welchem der erste Empfänger entweder mit Busanschlüssen der Steckverbindungseinheit oder mit Slaveanschlüssen der Steckverbindungseinheit verbindbar ist.

Alternativ dazu ist bei einer anderen Ausführungsform vorgesehen, dass das Slavekommunikationsgerät einen ersten, mit Slaveanschlüssen der Steckverbindungseinheit verbundenen Empfänger und einen zweiten mit Busanschlüssen der Steckverbindungseinheit verbundenen Empfänger aufweist.

Um mit dem Slavekommunikationsgerät auch in optimaler Weise die Slaveeinheit mit elektrischer Energie versorgen zu können, ist vorzugsweise vorgesehen, dass das Slavekommunikationsgerät eine Slavestromversorgung aufweist, die mit den Slaveanschlüssen der Steckverbindungseinheit verbindbar ist.

Um in optimaler Weise die Energieversorgung des Slavekommunikationsgeräts realisieren zu können, ist vorzugsweise vorgesehen, dass das Slavekommunikationsgerät eine Stromversorgung aufweist, die mit den Busanschlüssen der Steckverbindungseinheit verbindbar ist.

Vorzugsweise ist dabei die Slavestromversorgung so aufgebaut, dass diese eine mit der Busleitung verbindbare Stromversorgung des Slavekommunikationsgeräts sowie eine Entkopplungseinheit zur Stromversorgung der Slaveeinheit umfasst.

Hinsichtlich der weiteren Ausbildung des Slavekommunikationsgeräts wurden bislang keine näheren Angaben gemacht.

So sieht eine vorteilhafte Lösung vor, dass das Slavekommunikationsgerät eine Datenverarbeitungseinheit, eine Dateneingabeeinheit sowie eine Visualisierungseinheit aufweist.

Vorzugsweise ist dabei die Datenverarbeitungseinheit so ausgebildet, dass sie eine Steuerung, insbesondere eine Ablaufsteuerung, umfasst.

Ferner ist vorzugsweise vorgesehen, dass die Datenverarbeitungseinheit eine Simulationseinheit umfasst, mit welcher Einheiten des Feldbussystems, insbesondere eine Mastereinheit und/oder eine Slaveeinheit, simuliert werden können.

Hinsichtlich einzelner Betriebsmodi des Slavekommunikationsgeräts wurden bislang keine näheren Angaben gemacht.

Es wurde lediglich ein Betriebsmodus insoweit definiert, als er die Funktionalität eines bekannten Adressiermodus ausführen kann.

Eine vorteilhafte Lösung sieht dabei vor, dass das Slavekommunikationsgerät in einem Mastermodus Datensignale mit der der jeweiligen Verbindungseinheit zugeordneten Slaveeinheit austauscht.

Vorzugsweise ist dabei der Mastermodus so konfiguriert, dass in dem Mastermodus Adressierdaten generierbar und zur Slaveeinheit übertragbar sind.

Eine weitere Funktionalität sieht vor, dass mit dem Slavekommunikationsgerät in dem Mastermodus Antwortdaten der Slaveeinheit empfangbar sind.

Eine weitere vorteilhafte Lösung sieht vor, dass in dem Mastermodus eine Mastereinheit für die Slaveeinheit simulierbar ist.

Darüber hinaus sehen weitere Funktionalitäten des Slavekommunikationsgeräts vor, dass das Slavekommunikationsgerät in einem Monitormodus betreibbar ist, und dass in dem Monitormodus eine Überwachung einer Wechselwirkung zwischen der Mastereinheit und der Slaveeinheit über die Busleitung erfolgt.

Um eine derartige Überwachung einfach durchführen zu können, ist vorzugsweise vorgesehen, dass in dem Monitormodus die Übertragung von Datensignalen zwischen der Busleitung und der Slaveeinheit über das Slavekommunikationsgerät geführt ist.

Dies ist beispielsweise dadurch realisierbar, dass in dem Monitormodus das Slavekommunikationsgerät die Datensignale durch eine Leitungsverbindung des Schaltnetzwerks von dem Busanschluss der Steckverbindungseinheit zu dem Slaveanschluss der Steckverbindungseinheit führt.

Eine andere Lösung sieht vor, dass in dem Monitormodus das Slavekommunikationsgerät die Datensignale mit einem mit dem Busanschluss der Steckverbindungseinheit verbundenen Empfänger empfängt und über einen mit einem Slaveanschluss der Steckverbindungseinheit verbundenen Senders sendet oder mit einem mit dem Slaveanschluss der Steckverbindungseinheit verbundenen Empfänger empfängt und mit einem mit dem Busanschluss der Steckverbindungseinheit verbundenen Senders sendet.

Eine weitere Erweiterung der Funktionalitäten des erfindungsgemäßen Slavekommunikationsgeräts ist dann möglich, wenn das Slavekommunikationsgerät in einen Slavemodus mit der Mastereinheit wie eine Slaveeinheit zusammenwirkt.

Hierbei ist vorzugsweise vorgesehen, dass in dem Slavemodus das Slavekommunikationsgerät mit der Mastereinheit über die Busleitung anstelle der Slaveeinheit kommuniziert, so dass das Slavekommunikationsgerät Datensignale nicht zur Slaveeinheit weiterleitet, sondern selbst eine Slaveeinheit simuliert.

Vorzugsweise ist hierbei vorgesehen, dass in dem Slavemodus das Slavekommunikationsgerät von der Slaveeinheit abgekoppelt ist.

Beispielsweise ist in diesem Fall vorgesehen, dass die Datenverarbeitungseinheit der Simulationseinheit die Slaveeinheit simuliert und dabei in dem Slavemodus empfangene Datensignale bearbeitet und Datensignale zum Senden zur Verfügung generiert.

Eine besonders vorteilhafte Ausführungsform erlaubt es, das Slavekommunikationsgerät im Adressiermodus als Adressiergerät, im Matermodus als Diagnosegerät für die Slaveeinheit, im Monitormodus als Diagnosegerät oder Analyzer für die Wechselwirkung von Mastereinheit und Slaveeinheit und im Slavemodus als Simulator für die Slaveeinheit zu betreiben.

Darüber hinaus betrifft die Erfindung eine Slaveeinheit für ein Feldbussystem umfassend eine Mastereinheit und die durch eine zwei Adern aufweisende Busleitung mit der Mastereinheit verbundene Slaveeinheit, wobei die Slaveeinheit eine Steckverbindungseinheit für ein Slavekommunikationsgerät aufweist, welche bei einer Steckverbindung mit einem Steckverbinderelement des Slavekommunikationsgeräts die Verbindung zwischen der Slaveeinheit und der Busleitung unterbricht.

Bei einer derartigen Slaveeinheit besteht das Problem, dass mit dem angeschlossenen Slavekommunikationsgerät lediglich begrenzte Funktionalitäten realisierbar sind.

Daher liegt der Erfindung die Aufgabe zugrunde, eine Slaveeinheit der gattungsgemäßen Art derart zu verbessern, dass mit dem Slavekommunikationsgerät weitere Funktionalitäten möglich sind.

Diese Aufgabe wird bei einer Slaveeinheit der vorstehend beschriebenen Art erfindungsgemäß dadurch gelöst, dass die Steckverbindungseinheit eine Kontaktverbindung aufweist, durch welche bei bestehender Steckverbindung eine Verbindung zwischen dem Slavekommunikationsgerät und der Busleitung herstellbar ist.

Besonders günstig ist es dabei, wenn die Steckverbindungseinheit als Klinkensteckverbindungseinheit ausgebildet ist.

Um außerdem in einfacher Weise die Verbindung zwischen der Slaveeinheit und der Busleitung unterbrechen zu können, ist vorzugsweise vorgesehen, dass die Steckverbindungseinheit mit einem Schalter versehen ist.

Eine bevorzugte Ausführungsform der erfindungsgemäßen Steckverbindungseinheit sieht vor, dass die Klinkensteckverbindungseinheit mit drei Steckkontaktverbindungen ausgebildet ist.

Besonders günstig ist es dabei, wenn durch Herstellen der Steckverbindung die Verbindung zwischen der Busleitung und der Slaveeinheit lösbar und durch Lösen der Steckverbindung herstellbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine schematisch vereinfachte Darstellung eines erfindungsgemäßen Feldbussystems;
- Figur 2: eine schematische Schaltung in einer Steckverbindungseinheit gemäß dem Stand der Technik zur Verbindung der Slaveeinheit mit einem Slavekommunikationsgerät;
- Figur 3: ein Ausführungsbeispiel einer Realisierung einer Steckverbindung zwischen einer Slaveeinheit und einem Slavekommunikationsgerät;
- Figur 4: eine schematische Darstellung ähnlich Figur 2 bei einer erfindungsgemäßen Slaveeinheit;
- Figur 5: eine schematische Darstellung einer Steckbuchse für eine Steckverbindung bei der erfindungsgemäßen Slaveeinheit;
- Figur 6: eine Darstellung der Steckverbindung bei der erfindungsgemäßen Slaveeinheit;
- Figur 7: ein Schaltschema eines ersten Ausführungsbeispiel eines erfindungsgemäßen Slavekommunikationsgeräts; und
- Figur 8: ein Schaltschema eines zweiten Ausführungsbeispiels eines erfindungsgemäßen Slavekommunikationsgeräts.

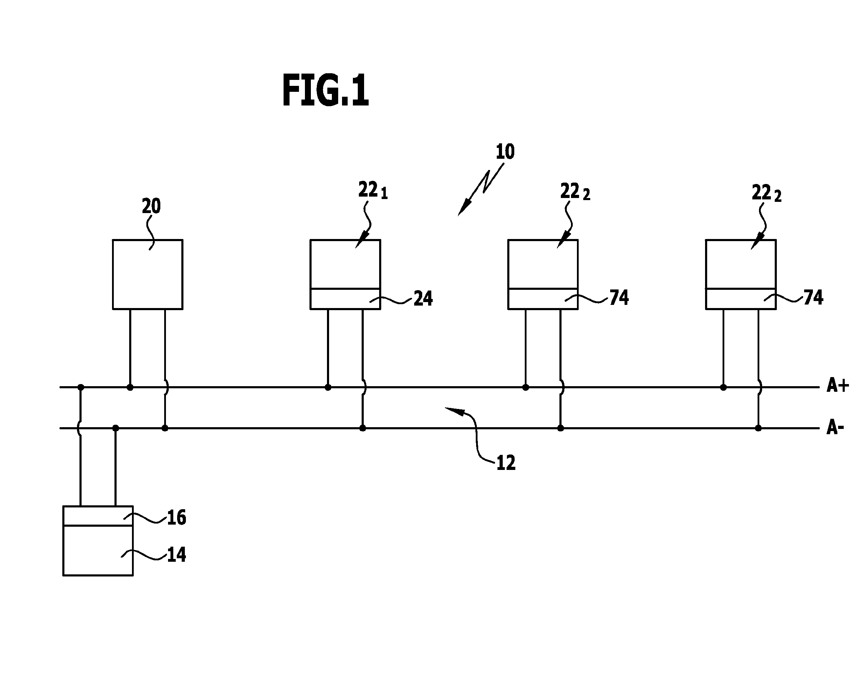

Ein in Figur 1 dargestelltes Ausführungsbeispiel eines erfindungsgemäßen Feldbussystems 10 umfasst eine Busleitung 12 mit zwei Adern A+, A- über welche sowohl eine Energieversorgung als auch ein Datentransfer stattfindet.

Zur Energieversorgung sind die beiden Adern A+ und A- mit einem Netzgerät 14 verbunden, welches eine Gleichspannung liefert, wobei zwischen dem Netzgerät 14 und der Busleitung 12 eine Entkopplungseinheit 16 vorgesehen ist, die es ermöglicht, über die beiden Adern A+ und A- der Busleitung 12 neben der elektrischen Energie auch Daten in Form von Datensignalen zu übertragen.

Mit der Busleitung 12 ist ferner eine Mastereinheit 20 verbunden sowie eine oder mehrere Slaveeinheiten 22, die mit der Mastereinheit 20 über die Busleitung 12 in Wechselwirkung treten, wobei sowohl die Matereinheit 20 als auch die Slaveeinheiten 22 über die Busleitung 12 mit elektrischer Energie versorgt werden und über die Busleitung 12 Daten übertragen.

Unter einem Feldbussystem 10 im vorstehend genannten Sinne ist ein Kommunikationsnetzwerk für die industrielle Automatisierungstechnik zu verstehen, wobei es sich um einen bitseriellen Bus für den Entfernungsbereich von einigen Metern bis zu einigen Kilometern handelt. Ein derartiges Feldbussystem kann auch als Factory-Area-Network, abgekürzt "FAN" bezeichnet werden.

Ein derartiges Feldbussystem 10 ist so aufgebaut, dass es einerseits extrem unterschiedlichen Umgebungsbedingungen standhält, die die zuverlässige Funktion nicht beeinträchtigen dürfen und außerdem offen und flexibel ist, damit es an die Anforderungen der verschiedenen Industriezweige optimal angepasst werden kann und schließlich noch einfach montierbar konfigurierbar und wartbar ist.

Ein derartiges Feldbussystem ist ein sogenannter AS-Interface-Bus, der beispielsweise in der europäischen Norm EN50295, Ref. Nr. EN50295:1999D, beschrieben ist.

Ferner ist ein derartiger AS-Interface-Bus auch unter der Internetadresse as-interface.net beschrieben.

Üblicherweise sind die Slaveeinheiten 22 eines derartigen Feldbussystems 10 -auch als Feldgeräte bezeichnet - Teilnehmer dieses Feldbusses, die vor Ort an einer Maschine oder einer Anlage installiert sind, um dort Daten, beispielsweise Sensordaten, zu erfassen und aufzubereiten, um in eine durchzuführenden Prozess einzugreifen, um Aktuatoren anzutreiben oder um mit dem Bedienpersonal zu kommunizieren, beispielsweise über Befehlsgeräte, Rückmeldeleuchten, Anzeigen etc.

Dabei werden zwischen der Mastereinheit und den Slaveeinheiten aufgrund der immer komplexer werdenden Kommunikation neben den eigentlichen Sender- oder Steuersignalen Informationen sowie Parametrierdaten ausgetauscht.

Der Datenaustausch erfolgt beispielsweise als serielle Datenübertragung über alternierende Signalinvertierung, AMI, oder über andere alternative Verfahren, wie beispielsweise APM oder FSK.

Ein vorstehend beschriebenes erfindungsgemäßes Feldbussystem kann zusätzlich zur Mastereinheit 20 eine Vielzahl Slaveeinheiten 22 umfassen. Da bei industrieller Anwendung eine defekte Einheit schnell ausgetauscht werden können muss, besteht die Anforderung, insbesondere im Fall von defekten Slaveeinheiten 22, dass mit diesen unter Abkopplung der Busleitung eine schnelle Kommunikation möglich sein muss, um beispielsweise Fehladressierungen oder Fehleinstellungen der jeweiligen Slaveeinheit schnell feststellen und beheben zu können.

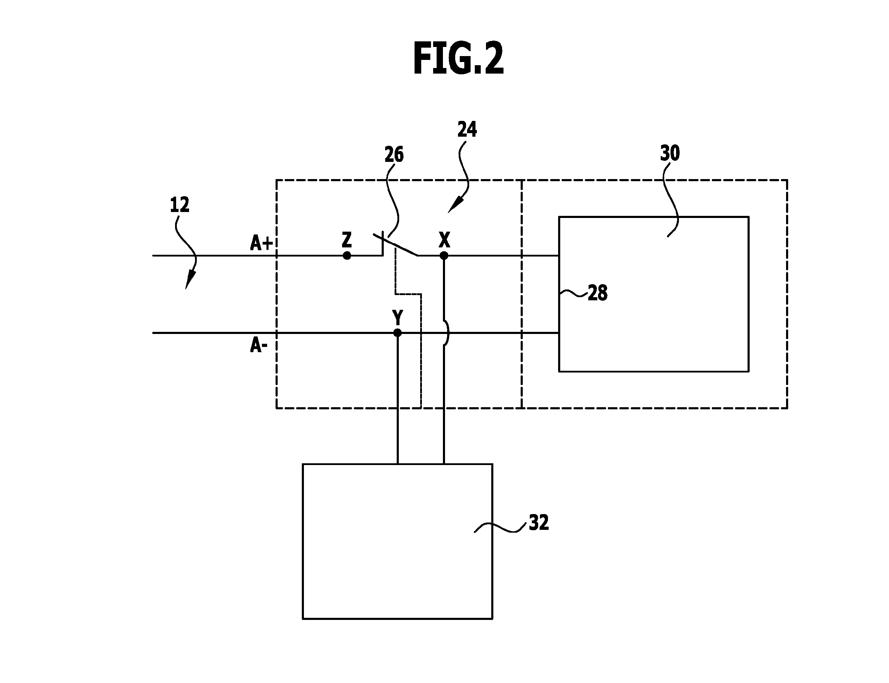

Aus diesem Grund ist jede der Slaveeinheiten 22 mit einer Verbindungseinheit 24, beispielsweise dargestellt in Figur 1 und 2, versehen, welche es, wie in Figur 2 dargestellt, ermöglicht, über einen Schalteinheit 26 die Verbindung zwischen der Busleitung 12 und einem Busleitungseingang 28 einer Buskommunikationseinheit 30 der Slaveeinheit 22 zu trennen und gleichzeitig eine Verbindung zwischen dem Busleitungseingang 28 der Buskommunikationseinheit 30 und einem Slavekommunikationsgerät 32 herzustellen.

In der Verbindungseinheit 24 ist dabei der Schalter 26 zwischen Anschlüssen Z und X in der Ader A+ der Busleitung 12 vorgesehen und es wird eine Verbindung des Slavekommunikationsgeräts 32 mit dem Anschluss X in der Ader A+ und einem Anschluss Y in der Ader A- in der Verbindungseinheit 24 hergestellt, wobei die Ader A- in der Verbindungseinheit 24 ohne Unterbrechung zum Busleitungseingang 28 der Buskommunikationseinheit 30 durchgeschleift ist.

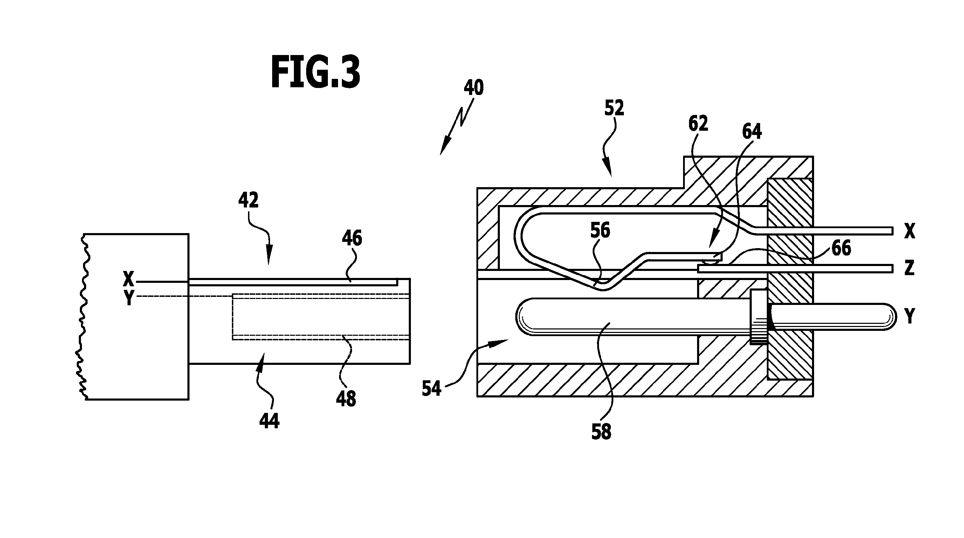

Wie in Figur 3 dargestellt, lässt sich eine derartige Verbindungseinheit 24 durch eine als Ganzes in Figur 3 mit 40 bezeichnete Steckverbindereinheit realisieren, welche einen Stecker 42 mit einem zylindrischen Kontaktabschnitt 44 aufweist, der eine äußere Kontaktfläche 46 sowie eine innere Kontaktfläche 48 umfasst.

Der Stecker 42 ist in eine Steckbuchse 52 einsteckbar, die eine Aufnahme 54 für den zylindrischen Kontaktabschnitt 44 aufweist, in welche radial von außen ein Kontaktbügel 56 zur Kontaktierung der äußeren Kontaktfläche 46 hineinragt und ein Kontaktstift 58 zur Kontaktierung der inneren Kontaktfläche 48.

Ferner ist der Kontaktbügel 56 beim Einstecken des zylindrischen Kontaktabschnitts 44 in die Aufnahme 54 radial nach außen bewegbar, so dass durch Bewegen des Kontaktbügels 56 ein Schalter 62 betätigbar ist, der im einfachsten dadurch gebildet ist, dass ein Ende des Kontaktbügels 56 einen ersten Schaltkontakt 64 aufweist, der im unbeaufschlagten Zustand auf einem zweiten, in der Steckbuchse 52 vorgesehenen Schaltkontakt 66 aufliegt und mit diesem eine elektrisch leitende Verbindung dann herstellt, wenn der Kontaktbügel 56 nicht radial von der äußeren Kontaktfläche 46 nach außen bewegt ist, jedoch die elektrische Verbindung löst, wenn der Kontaktbügel 56 durch die äußere Kontaktfläche 46 radial nach außen bewegt ist.

Der Schalter 62 stellt somit die einfachste Realisierung der Schalteinheit 26 dar, deren Funktion vorstehend erläutert wurde.

Die Steckbuchse 52 ist dabei, wie in Figur 3 und Verbindung mit Figur 2 dargestellt, mit den Anschlüssen X, Y und Z der Busleitung 12 innerhalb der Verbindungseinheit 24 verbunden und der Stecker 42 ist mit dem Slavekommunikationsgerät 32 verbunden, das lediglich Ausgänge für die Anschlüsse X und Y im Stecker 42 aufweist.

Damit lässt sich bei der bekannten Lösung in einfacher Weise das Slavekommunikationsgerät 32 zur Kommunikation mit der jeweiligen Slaveeinheit 22 über die entsprechende Verbindungseinheit 24 verbinden.

Erfindungsgemäß ist anstelle der bekannten Verbindungseinheit 24 nunmehr eine Verbindungseinheit 74 in zumindest einem Teil der Slaveeinheiten 22 vorgesehen, die es ermöglicht, das Slavekommunikationsgerät 32 mit den Anschlüssen X, Y und Z in dieser Verbindungseinheit 74 jeder Slaveeinheit 22 lösbar zu verbinden.

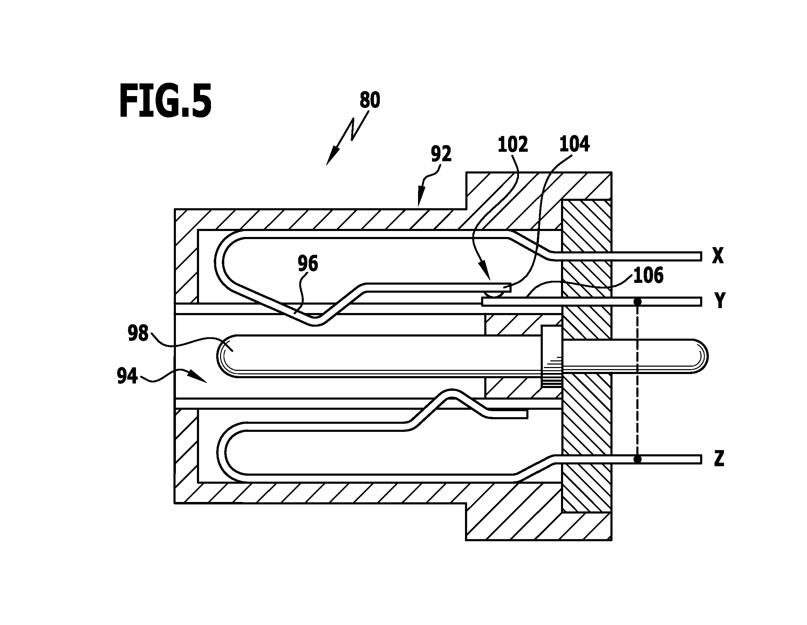

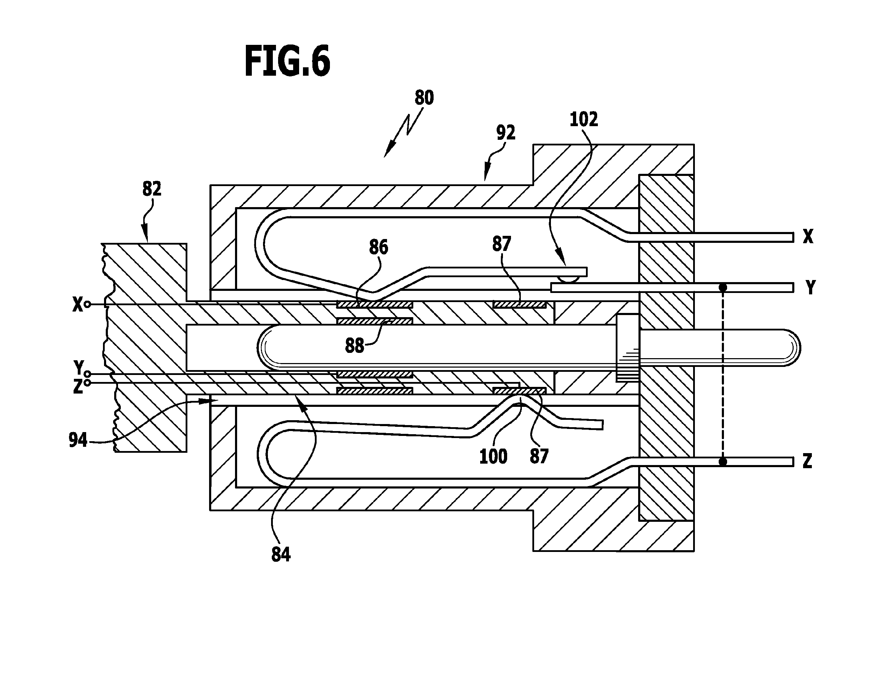

Hierzu ist, wie in Figur 5 und 6 dargestellt, eine Steckverbindereinheit 80 vorgesehen, deren Stecker 82 ebenfalls den zylindrischen Kontaktabschnitt 84 aufweist, der in diesem Fall jedoch zusätzlich zur ersten äußeren Kontaktfläche 86 eine zweite äußere Kontaktfläche 87 aufweist und in gleicher Weise wie beim Stecker 42 eine innere Kontaktfläche 88.

In gleicher Weise wie bei der Steckverbindereinheit 40 umfasst eine Steckbuchse 92 eine Aufnahme 94 für den zylindrischen Kontaktabschnitt 84, wobei in die Aufnahme 94 ein Kontaktbügel 96 hineinragt, der durch die äußere Kontaktfläche 86 radial nach außen bewegbar ist.

Ferner ragt in die Aufnahme 94 der Kontaktstift 98 in gleicher Weise wie bei der Steckverbindereinheit 40 beschrieben.

Schließlich ist auch mit dem Kontaktbügel 96 ein Schalter 102 betätigbar, der gebildet ist durch einen ersten Schaltkontakt 104 und einen zweiten Schaltkontakt 106, die in gleicher Weise wie im Zusammenhang mit der Steckverbindereinheit 40 beschrieben, wie die Schaltkontakte 64 und 66 ausgebildet sind und funktionieren, wobei der Kontaktbügel 96 mit der ersten äußeren Kontaktfläche 86 in Wechselwirkung tritt, um den Schalter 102 zu betätigen.

Zusätzlich ist die zweite äußere Kontaktfläche 87 so angeordnet, dass mit dieser ein Kontaktbügel 100 der Steckbuchse 92 in Wechselwirkung tritt und eine elektrische Verbindung mit der zweiten äußeren Kontaktfläche 97 herstellt.

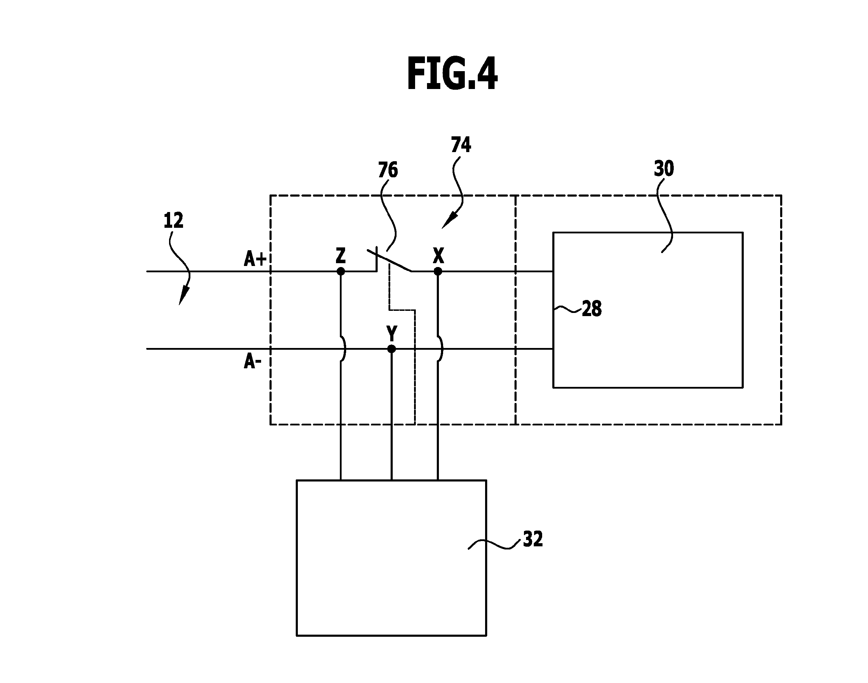

Damit besteht bei Einstecken des Steckers 42 in die Steckbuchse 92 die Möglichkeit, wie in Figur 4 ebenfalls dargestellt, eine elektrische Verbindung mit den Anschlüssen X, Y und Z der Busleitung 12 in der jeweiligen Verbindungseinheit 74 herzustellen und dabei die Schalteinheit 76 zu betätigen, die durch den Schalter 102 in der Steckbuchse 92 gebildet ist.

Bei eingestecktem Stecker 82 in der Steckbuchse 92 ist somit das Slavekommunikationsgerät 32 mit den Anschlüssen X, Y und Z der Busleitung 12 innerhalb der Verbindungseinheit 74 elektrisch leitend verbunden.

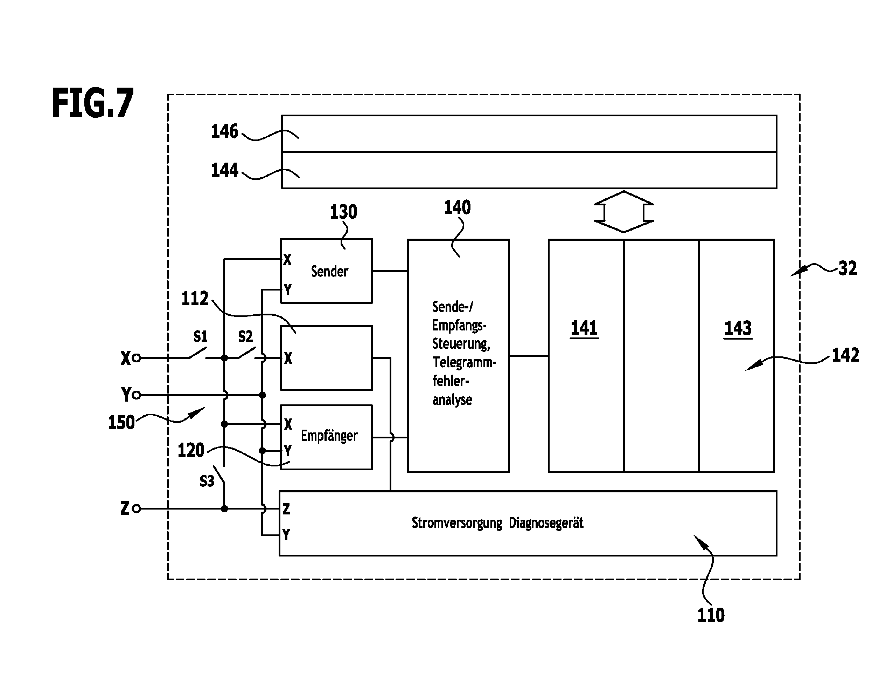

Das erste Ausführungsbeispiel des erfindungsgemäßen Slavekommunikationsgeräts 32, dargestellt in Figur 7, umfasst eine Stromversorgung 110, einen ersten Empfänger 120 für den Empfang eines Datensignals in Form eines Bitstroms und einen ersten Sender 130 zum Senden eines Datensignals in Form eines Bitstroms.

Der erste Empfänger 120 und der erste Sender 130 sind mit einer ersten Sende/Empfangssteuerung 140 verbunden, die ihrerseits mit einer eine Ablaufsteuerung 141 umfassenden Datenverarbeitungseinheit 142 in Wechselwirkung tritt, wobei andererseits die Datenverarbeitungseinheit 142 noch mit einer Eingabeeinheit 144, beispielsweise in Form einer Tastatur und einer Visualisierungseinheit 146, beispielsweise in Form eines Bildschirms wechselwirkt, wobei über den Bildschirm 146 Zustände angezeigt werden können und über die Tastatur 144 Eingaben vorgenommen werden können.

Zusätzlich ist mit der Stromversorgung 110 noch eine Entkopplungseinheit 112 verbunden, die dazu eingesetzt werden kann, in Verbindung mit der Stromversorgung 110 eine Stromversorgung der mit dem Slavekommunikationsgerät 32 verbundenen Slaveeinheit 22 herzustellen.

Das erfindungsgemäße Slavekommunikationsgerät 32 ist nun in mehreren Betriebsmodi betreibbar, wobei für die einzelnen Betriebsmodi eine geeignete Verbindung zwischen dem ersten Empfänger 120, dem ersten Sender 130 und der Datenentkopplung 112 herstellbar ist, wobei hierzu ein Schaltnetzwerk 150 in dem Slavekommunikationsgerät 32 vorgesehen ist, das einerseits ständig einen Y-Anschluss der Stromversorgung 110, des ersten Empfängers 120, der Entkopplungseinheit 112 und des ersten Senders 130 mit dem Y-Anschluss des Steckers 42 ständig verbindet.

Ferner umfasst das Schaltnetzwerk 150 einen Schalter S1, mit welchem die X-Anschlüsse des ersten Empfängers 120 und des ersten Senders 130 mit dem X-Anschluss des Slavekommunikationsgeräts 32 verbindbar sind.

Darüber hinaus ist ein Schalter S2 vorgesehen, mit welchem ein X-Anschluss der Entkopplungseinheit 112 ebenfalls mit dem X-Anschluss des Slavekommunikationsgeräts 32 verbindbar ist.

Ferner umfasst das Schaltnetzwerk 150 noch einen Schalter S3, mit welchem der ständig mit dem Z-Anschluss der Stromversorgung 110 verbundene Z-Anschluss des Slavekommunikationsgeräts 32 mit dem X-Anschluss des ersten Empfängers 120 und dem X-Anschluss des ersten Senders 130 verbindbar ist.

In den verschiedenen Betriebsmodi ist das Schaltnetzwerk 150 wie folgt geschaltet:

In dem Mastermodus verbindet das Schaltnetzwerk 150 den X-Anschluss des Slavekommunikationsgeräts mit den X-Anschlüssen des ersten Empfängers 120 und des ersten Senders 130 und außerdem den X-Anschluss der Entkopplungseinheit 112 ebenfalls mit dem X-Anschluss des Slavekommunikationsgeräts 32.

Die Realisierung des Mastermodus in der in Figur 7 dargestellten Ausführungsform sieht dabei so aus, dass die Schalter S1 und S2 geschlossen sind und der Schalter S3 offen ist.

In dem Monitormodus verbindet das Schaltnetzwerk 150 den X-Anschluss des Slavekommunikationsgeräts 32 mit den X-Anschlüssen des ersten Empfängers 120 und des ersten Senders 130 und außerdem ist der Z-Anschluss des Slavekommunikationsgeräts 32 mit dessen X-Anschluss verbunden.

In der in Figur 7 dargestellten Realisierung heißt dies, dass die Schalter S1 und S3 geschlossen sind und der Schalter S2 offen ist, wobei der erste Sender 130 nicht arbeitet.

In dem Slavemodus verbindet das Schaltnetzwerk 150 den X-Anschluss des ersten Empfängers 120 und den X-Anschluss des ersten Senders 130 mit dem Z-Anschluss des Slavekommunikationsgeräts 32, jedoch nicht mit dem X-Anschluss des Slavekommunikationsgeräts 32.

In der in Figur 7 dargestellten Realisierung heißt dies, dass der Schalter S3 geschlossen ist, die Schalter S1 und S2 jedoch offen sind.

Das Slavekommunikationsgerät 32 kann in den verschiedenen Modi beispielsweise wie folgt betrieben werden.

Im Matermodus erfolgt eine Trennung zwischen der Slaveeinheit 22 und der Busleitung 12 in der Ader A+, so dass das Slavekommunikationsgerät 32 über seinen X-Anschluss und seinen Y-Anschluss mit den Slaveanschlüssen X und Y der Verbindungseinheit 24 verbunden ist und aufgrund der geöffneten Schalteinheit 26 lediglich mit der der Verbindungseinheit 24 zugeordneten Slaveeinheit 22 kommuniziert (Figur 4).

In diesem Fall besteht die Möglichkeit, das Slavekommunikationsgerät 32 zum Adressieren der jeweiligen Slaveeinheit 22 einzusetzen, wobei der erste Sender 130 Datensignale zur Buskommunikationseinheit 30 der Slaveeinheit 22 sendet und der erste Empfänger 120 Datensignale von der Buskommunikationseinheit 30 der jeweiligen Slaveeinheit 22 empfängt.

Damit ist eine herkömmliche Adressierung der jeweiligen Slaveeinheit 22 mit Rückmeldung in der bekannten Art und Weise möglich.

Der Vorteil des erfindungsgemäßen Slavekommunikationsgeräts 32 besteht jedoch darin, dass dieses über den Z-Anschluss und den Y-Anschluss trotz geöffneter Schalteinheit 76 von der Busleitung 12 mit elektrischer Energie versorgt wird, so dass mittels der Stromversorgung 110 und der mit dieser verbundenen Entkopplungseinheit 112 auch eine Energieversorgung der jeweiligen Slaveeinheit 22 über den X-Anschluss und den Y-Anschluss des Slavekommunikationsgeräts 32 erfolgen kann und somit in dem Slavekommunikationsgerät 32 kein Akkumulator oder keine Batterie zur Versorgung der jeweiligen Slaveeinheit 22 mit elektrischer Energie bei der Adressierung erforderlich ist.

Über die bekannte Adressierung der jeweiligen Slaveeinheit 22 hinaus besteht aber auch die Möglichkeit, mit dem Slavekommunikationsgerät 32 -beispielsweise durch Simulation einer Mastereinheit mittels einer Simulationseinheit 143 in der Datenverarbeitungseinheit 142- eine Diagnose der Funktionen in der jeweiligen Slaveeinheit 22 durchzuführen, da diese unabhängig von den anderen Slaveeinheiten 22 des Feldbussystems 10 direkt angesprochen werden kann.

Selbst bei einer zeitlich lang andauernden Diagnose stellen die Betriebsströme, die die Slaveeinheit 22 bei einer derartigen Diagnose benötigt, kein technisches oder zeitliches Problem dar. Die Versorgung der Slaveeinheit 22 mit elektrischer Energie über die Stromversorgung 110 und die Entkopplungseinheit 112 kann über beliebig lange Zeiträume erfolgen.

Insbesondere können im Mastermodus lang andauernde Testzyklen der Slaveeinheiten 22 -durch Simulation einer Mastereinheit seitens des Slavekommunikationsgeräts 32- durchgeführt werden, die aufgrund der Versorgung des Slavekommunikationsgeräts 32 mit elektrischer Energie über die Busleitung 12 sowie der entsprechenden Slaveeinheit 22 über das Slavekommunikationsgerät 32 zeitlich keinerlei Begrenzungen unterliegt.

Darüber hinaus kann das Slavekommunikationsgerät 32 auch bei herkömmlichen Verbindungseinheiten 24 eingesetzt werden, da bei herkömmlichen Verbindungseinheiten 24 auch über den Stecker 82 der dann, wenn dieser in die Steckbuchse 52 eingesteckt wird, eine elektrische Verbindung zwischen dem X-Anschluss und dem Y-Anschluss der Busleitung 12 in der Verbindungseinheit 24 realisierbar ist.

Wird dabei das erfindungsgemäße Slavekommunikationsgerät 32 im Mastermodus betrieben, so können der erste Sender 130 und der erste Empfänger 120 mit der Buskommunikationseinheit 30 der jeweils zugeordneten Slaveeinheit 22 kommunizieren.

Somit kann mit dem erfindungsgemäßen Slavekommunikationsgerät 32 die beschriebene Diagnose der jeweiligen Slaveeinheit 22 auch über die konventionelle Verbindungseinheit 24 durchgeführt werden, wobei allerdings in diesem Fall dann das Slavekommunikationsgerät 32 eine autarke Versorgung mit elektrischer Energie benötigt, da bei einer herkömmlichen Steckbuchse 52 keine Verbindung mit dem Z-Anschluss der Busleitung 12 in der Verbindungseinheit 24 möglich ist.

Im Monitormodus kann das erfindungsgemäße Slavekommunikationsgerät 32 bislang nicht bekannte Funktionen wahrnehmen.

Es besteht die Möglichkeit, über den ersten Empfänger 120 sowohl Datensignale der Mastereinheit 20 als auch der Slaveeinheiten 22 zu empfangen, wobei die Mastereinheit 20 mit der jeweiligen Slaveeinheit 22 ungestört kommuniziert. Das erfindungsgemäße Slavekommunikationsgerät 32 wird in diesem Monitormodus lediglich dazu eingesetzt, den Datenverkehr zwischen der Mastereinheit 20 und der jeweiligen Slaveeinheit 22 mitzuhören und gegebenenfalls die erhaltenen Informationen in Echtzeit auf der Visualisierungseinheit 146 anzuzeigen und zu protokollieren.

Dieser Monitormodus ist insbesondere während der Inbetriebnahme von AS-Interface-Netzwerken von Vorteil, um die Wechselwirkung zwischen der Mastereinheit 20 und der jeweiligen Slaveeinheit 22 gezielt überprüfen und verfolgen zu können.

Insbesondere besteht die Möglichkeit, bei Einsatz eines erfindungsgemäßen Slavekommunikationsgeräts 32 die auf Seiten der Slaveeinheit 22 üblicherweise bislang vorhandenen Schaltzustandsanzeigen, insbesondere entsprechende optische Schaltzustandsanzeigen, durch Leuchtdioden, oder auch die Anzeige von Analogwerten, entfallen zu lassen und somit die durch diese Anzeigen erforderliche und ständig bei Betrieb der Slaveeinheit 22verbrauchte Energie einzusparen, so dass das Feldbussystem mit derart modifizierten Slaveeinheiten 22 eine höhere Energieeffizienz aufweist.

Insbesondere besteht bei einem derartigen Monitormodus mit dem erfindungsgemäßen Slavekommunikationsgerät 32 auch noch die Möglichkeit, den gesamten Datenverkehr zwischen der Mastereinheit 20 und der jeweiligen Slaveeinheit 22 mittels der Datenverarbeitungseinheit 142 abzuspeichern und nachfolgend im Detail auszuwerten.

In dem Slavemodus besteht mit dem erfindungsgemäßen Slavekommunikationsgerät 32 die Möglichkeit, die der jeweiligen Verbindungseinheit 74 zugeordnete Slaveeinheit 22 in der Simulationseinheit 143 zu simulieren und somit lediglich einen Datenverkehr zwischen der Mastereinheit 20 und dem jeweiligen Slavekommunikationsgerät 22 durchzuführen, so dass die Möglichkeit besteht, die jeweiligen Steuerbefehle mit der Visualisierungseinheit 146 für eine Bedienungsperson darzustellen und durch die Datenverarbeitungseinheit 142 zu speichern und/oder auszuwerten, wobei die Simulationseinheit 143 ein für die jeweilige Slaveeinheit 22 geeignetes Simulationsprogramm aufweist, das in der Lage ist, mittels des ersten Empfängers 120 und des ersten Senders 130 die Datensignale der jeweiligen Slaveeinheit 22 im Datenverkehr mit der Mastereinheit 20 zu simulieren.

Der Slavemodus liefert somit ebenfalls umfangreiche Möglichkeiten eines eingehenden Testbetriebs beim erfindungsgemäßen Feldbussystem 10.

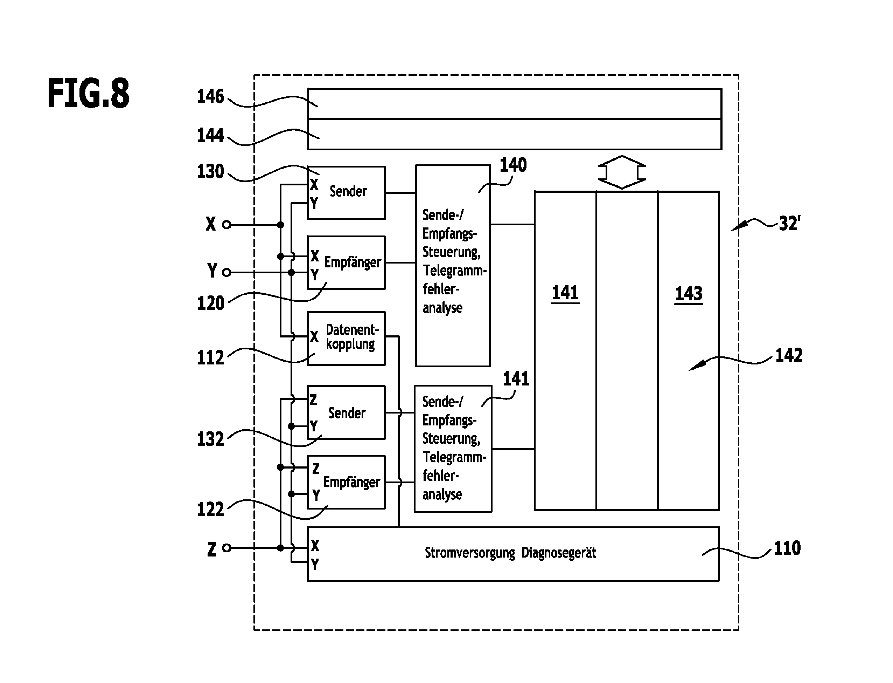

Bei einem zweiten Ausführungsbeispiel eines erfindungsgemäßen Slavekommunikationsgeräts 32', dargestellt in Figur 8, sind in gleicher Weise wie beim ersten, in Figur 7 dargestellten Ausführungsbeispiel des erfindungsgemäßen Slavekommunikationsgeräts 32 die Stromversorgung 110 und die Entkopplungseinheit 112 sowie die Datenverarbeitungseinheit 142 mit der Eingabeeinheit 144 und der Visualisierungseinheit 146 vorgesehen.

In Abwandlung zum ersten Ausführungsbeispiel sind der erste Empfänger 120 und der erste Sender 130 mit ihren X-Anschlüssen mit dem X-Anschluss des Slavekommunikationsgeräts 32' ständig verbunden.

Ferner besteht eine ständige Verbindung des X-Anschlusses des Slavekommunikationsgeräts 32' mit der Entkopplungseinheit 112.

Ferner sind der Y-Anschluss des Slavekommunikationsgeräts 32 mit sämtlichen Y-Anschlüssen sowohl des ersten Empfängers 120 und des ersten Senders 130 als auch eines zweiten Empfängers 122 und eines zweiten Senders 132 sowie mit dem Y-Anschluss der Stromversorgung 110 verbunden.

Die Z-Anschlüsse des zweiten Empfängers 122 und des zweiten Senders 132 sind ihrerseits ständig mit dem Z-Anschluss des Slavekommunikationsgeräts 32' verbunden.

Damit kann das Schaltnetzwerk 150, wie es beim ersten, in Figur 7 dargestellten Ausführungsbeispiel des erfindungsgemäßen Slavekommunikationsgeräts notwendig ist, entfallen.

Ferner sind der erste Empfänger 120 und der erste Sender 130 mit einer ersten Sende/Empfangssteuerung 140 und der zweite Empfänger 122 und der zweite Sender 132 mit einer zweiten Sende/Empfangssteuerung 141 verbunden, die ihrerseits wiederum mit der Datenverarbeitungseinheit 142 verbunden sind.

Damit können sowohl der erste Empfänger 120 und der erste Sender 130 sowie der zweite Empfänger 122 und der zweite Sender 132 gleichzeitig betrieben werden.

Bei dem zweiten Ausführungsbeispiel des erfindungsgemäßen Slavekommunikationsgeräts 32' besteht somit die Möglichkeit, anstelle der von dem Schaltnetzwerk 150 vorgesehenen Funktionen die verschiedenen Betriebsmodi dadurch zu realisieren, dass der erste Empfänger 120 und der erste Sender 130 sowie der zweite Empfänger 122 und der zweite Sender 132 durch Firmware, das heißt abgespeicherte Software der Datenverarbeitungseinheit 142 selektiv eingesetzt werden können, wobei der erste Empfänger 120 und der erste Sender 130 lediglich dazu eingesetzt werden, mit der Buskommunikationseinheit 30 der entsprechenden Slaveeinheit 22 zu kommunizieren und der zweite Empfänger 122 und der zweite Sender 132 dazu eingesetzt werden, mit der Mastereinheit 20 über die Busleitung 12 zu kommunizieren.

Im Monitormodus ist es daher noch zusätzlich erforderlich, dass die vom zweiten Empfänger 122 empfangenen Datensignale über die Datenverarbeitungseinheit 142 an dem ersten Sender 130 weitergeleitet werden, damit dieser sie wiederum an die Buskommunikationseinheit 30 der entsprechenden Slaveeinheit 22 weitergibt.

In gleicher Weise werden die Datensignale, die von der jeweiligen Slaveeinheit 22, das heißt der Buskommunikationseinheit 30 derselben, ausgesandt werden, vom ersten Empfänger 120 empfangen, über die Datenverarbeitungseinheit 142 an den zweiten Sender 132 weitergeleitet, so dass dieser diese Datensignale wiederum über die Busleitung 12 zur Mastereinheit 20 senden kann.

Das heißt, dass bei dem zweiten Ausführungsbeispiel des erfindungsgemäßen Slavekommunikationsgeräts 32' die Durchschleifung der Datensignale durch das Slavekommunikationsgerät 32' über die Software der Datenverarbeitungseinheit 142 realisiert wird.

## Patentansprüche

1. Slavekommunikationsgerät (32) für ein Feldbussystem (10) umfassend eine Mastereinheit (20) und mindestens eine durch eine zwei Adern (A+, A) aufweisende Busleitung (12) mit der Mastereinheit (20) verbundene Slaveeinheit (22), wobei das Slavekommunikationsgerät (32) mit der Slaveeinheit (22) lösbar verbindbar ist und wobei mit dem Slavekommunikationsgerät (32) in einem Betriebsmodus die Slaveeinheit (22) adressierbar ist,
**dadurch gekennzeichnet, dass** das Slavekommunikationsgerät (32) bei einer Kommunikation mit der Slaveeinheit (22) zur Energieversorgung mit der Busleitung (12) koppelbar ist.

2. Slavekommunikationsgerät (32) nach Anspruch 1, **dadurch gekennzeichnet, dass** die Verbindung zwischen der Busleitung (12) und dem Slavekommunikationsgerät (32) über eine Steckverbindungseinheit (74) mit der Slaveeinheit (22) herstellbar ist, über welche außerdem die Kommunikation mit der Slaveeinheit (22) beim Betrieb des Slavekommunikationsgeräts (32) in dem Betriebsmodus erfolgt.

3. Slavekommunikationsgerät nach dem Oberbegriff des Anspruchs 1 oder nach einem der voranstehenden Ansprüche, **dadurch gekennzeichnet, dass** das Slavekommunikationsgerät (32) mindestens einen ersten Sender (132) aufweist, welcher feldbusgeeignete Datensignale zur Übermittlung aussendet.

4. Slavekommunikationsgerät nach Anspruch 3, **dadurch gekennzeichnet, dass** das Slavekommunikationsgerät (32) ein Schaltnetzwerk (150) aufweist, mit welchem der erste Sender (130) entweder mit Busanschlüssen (Z, Y) der Steckverbindungseinheit (74) oder mit Slaveanschlüssen (X, Y) der Steckverbindungseinheit (74) verbindbar ist.

5. Slavekommunikationsgerät nach Anspruch 3, **dadurch gekennzeichnet, dass** das Slavekommunikationsgerät (32') einen ersten mit Slaveanschlüssen (X, Y) der Steckverbindungseinheit (74) verbundenen Sender (130) und einen zweiten mit Busanschlüssen (Z, Y) der Steckverbindungseinheit (74) verbundenen Sender (132) aufweist.

6. Slavekommunikationsgerät nach dem Oberbegriff des Anspruchs 1 oder nach einem der voranstehenden Ansprüche, **dadurch gekennzeichnet, dass** das Slavekommunikationsgerät (32) mindestens einen Empfänger (120) aufweist, welcher feldbusgeeignete Datensignale empfängt.

7. Slavekommunikationsgerät nach Anspruch 6, **dadurch gekennzeichnet, dass** das Slavekommunikationsgerät (32) ein Schaltnetzwerk (150) aufweist, mit welchem der erste Empfänger (120) entweder mit Busanschlüssen (Z, Y) der Steckverbindungseinheit (74) oder mit Slaveanschlüssen (X, Y) der Steckverbindungseinheit (74) verbindbar ist.

8. Slavekommunikationsgerät nach Anspruch 6, **dadurch gekennzeichnet, dass** das Slavekommunikationsgerät (32) einen ersten, mit Slaveanschlüssen (X, Y) der Steckverbindungseinheit (74) verbundenen Empfänger (120) und einen zweiten, mit Busanschlüssen (Z, Y) der Steckverbindungseinheit (74) verbundenen Empfänger (122) aufweist.

9. Slavekommunikationsgerät nach dem Oberbegriff des Anspruchs 1 oder nach einem der voranstehenden Ansprüche, **dadurch gekennzeichnet, dass** das Slavekommunikationsgerät (32) in einem Mastermodus Datensignale mit der zugeordneten Slaveeinheit (22) austauscht.

10. Slavekommunikationsgerät nach Anspruch 9, **dadurch gekennzeichnet, dass** das Slavekommunikationsgerät (32) in dem Mastermodus Adressierdaten generiert und an die Slaveeinheit (22) sendet.

11. Slavekommunikationsgerät nach dem Oberbegriff des Anspruchs 1 oder nach einem der voranstehenden Ansprüche, **dadurch gekennzeichnet, dass** das Slavekommunikationsgerät (32) in einem Monitormodus betreibbar ist und dass in dem Monitormodus eine Überwachung einer Wechselwirkung zwischen der Mastereinheit (20) und der Slaveeinheit (22) über die Busleitung (12) erfolgt.

12. Slavekommunikationsgerät nach Anspruch 11, **dadurch gekennzeichnet, dass** in dem Monitormodus die Übertragung von Datensignalen zwischen der Busleitung (12) und der Slaveeinheit (22) über das Slavekommunikationsgerät (32) geführt ist.

13. Slavekommunikationsgerät nach dem Oberbegriff des Anspruchs 1 oder nach einem der voranstehenden Ansprüche, **dadurch gekennzeichnet, dass** das Slavekommunikationsgerät (32) in einen Slavemodus mit der Mastereinheit (20) wie eine Slaveeinheit zusammenwirkt.

14. Slavekommunikationsgerät nach Anspruch 13, **dadurch gekennzeichnet, dass** in dem Slavemodus das Slavekommunikationsgerät (32) mit der Mastereinheit (20) über die Busleitung (12) anstelle der Slaveeinheit kommuniziert.

15. Slaveeinheit (22) für ein Feldbussystem (10) umfassend eine Mastereinheit (20) und die durch eine zwei Adern (A+ , A-) aufweisende Busleitung (12) mit der Mastereinheit (20) verbundene Slaveeinheit (22), wobei die Slaveeinheit (22) eine Steckverbindungseinheit (74) für ein Slavekommunikationsgerät (32) aufweist, welche bei einer Steckverbindung mit einem Steckverbinderelement (82) des Slavekommunikationsgeräts (32) die Verbindung zwischen der Slaveeinheit (22) und der Busleitung (12) unterbricht, **dadurch gekennzeichnet, dass** die Steckverbindungseinheit (74) eine Kontaktverbindung aufweist, durch welche bei bestehender Steckverbindung eine Verbindung zwischen dem Slavekommunikationsgerät (32) und der Busleitung (12) herstellbar ist.

16. Slaveeinheit nach Anspruch 15, **dadurch gekennzeichnet, dass** durch Herstellen der Steckverbindung die Verbindung zwischen der Busleitung (12) und der Slaveeinheit (22) lösbar und durch Lösen der Steckverbindung die Verbindung zwischen der Busleitung (12) und der Slaveeinheit (22) herstellbar ist.
